# EUROPEAN PATENT APPLICATION

(11) **EP 4 385 869 A1**
(43) Date of publication of application: **19.06.2024**
(21) Application number: 23216309.7
(22) Date of filing: 13.12.2023
(51) Int. Cl.: B62J 50/21, B60K 35/60, B62K 21/00

(54) **A SPEEDOMETER MOUNTING ASSEMBLY FOR A VEHICLE**

(30) Priority: 15.12.2022 IN 202241072636
(71) Applicant: TVS Motor Company Limited, Chennai 600 006, Tamil Nadu (IN)
(72) Inventor: JAISWAL, HARSHIT KUMAR, 600 006 Chennai (IN); SHARMANATH, SORNAPPAN BANU, 600 006 Chennai (IN); RAVILLA, PRASAD, 600 006 Chennai (IN); RAJU, KARANAM VENKATA MANGA, 600 006 Chennai (IN); GOVIND, DHURI AMEY, 600 006 Chennai (IN); PRADEEP, SELVARAJ, 600 006 Chennai (IN); MAKWANA, PRASHANTKUMAR VASANTBHAI, 600 006 Chennai (IN)
(74) Representative: Tobiasz-Dumania, Katarzyna

(57) **Abstract**

The present invention relates to a speedometer mounting assembly (100) for a vehicle. The speedometer mounting assembly (100) comprises a first bracket (102) and a second bracket (106). The first bracket is (102) adapted to be mounted on a steering column (104) of the vehicle. The second bracket (106) adapted to tiltably support a speedometer (108) of the vehicle, the second bracket (106) being interfaced with the first bracket (102) to obtain a non-rotatable mounting of the speedometer (108). The speedometer (108) can be adjusted at a first position, a second position or a third position as per the requirement of the rider of the vehicle. The adjustment of speedometer (108) at the different positions aids the rider to reduce heat caused by direct solar radiation on the speedometer (108) and also provides relief by avoiding glare caused by reflection of light from the speedometer.

## Description

### FIELD OF THE INVENTION

The present invention relates to a vehicle. More particularly, the present invention relates to a speedometer mounting assembly for the vehicle.

### BACKGROUND OF THE INVENTION

Speedometer is provided for indicating speed of the vehicle. In saddle type vehicle such as motorcycle, the speedometer is generally fixed in a housing provided on the vehicle and cannot be adjusted at different angles as per the requirement of a rider of the vehicle. For example, in a scenario, wherein light from sun is reflected from the speedometer, it is difficult for the rider of the vehicle to view the readings indicated by the speedometer. Also, it is difficult for the rider to avoid glare caused by reflection of light from the speedometer. However, as the speedometer is fixed, the rider cannot adjust the speedometer to avoid glare or to view the readings of the speedometer.

In prior art, attempts have been made to tiltably support the speedometer on a handlebar of the vehicle via meter stay. However, in such a scenario, wires and/or cables routed via the handlebar of the vehicle are positioned adjacent to the meter stay which negatively affects the aesthetics of the vehicle. Also, accommodating the meter stays near wires and/or cables may create concerns such as wire pinching issues while assembling the vehicle, wire pulling issues while steering the vehicle or tilting the speedometer. Also, in order to arrest rotation of the meter stay with respect to the handlebar while tilting the speedometer, the meter stay is fastened to the handlebar using multiple fasteners fastened at different axis with respect to each other. Use of multiple fasteners which are fastened at different axes with respect to each other also negatively affects the aesthetics of the vehicle.

In view of the foregoing, there is a need felt to provide a speedometer mounting assembly which overcomes at least the above-mentioned disadvantages of the prior art.

### SUMMARY OF THE INVENTION

In one aspect of the invention, a speedometer mounting assembly for a vehicle is disclosed. The speedometer mounting assembly includes a first bracket and a second bracket. The first bracket is adapted to be mounted on a steering column of the vehicle. The second bracket is adapted to tiltably support a speedometer of the vehicle. The second bracket is interfaced with the first bracket to obtain a non-rotatable mounting of the speedometer.

In an embodiment, the second bracket includes a base wall, a first side wall and a second side wall. The base wall extends between a first end and a second end. The first wall extends from the first end of the base wall and the second wall extends from the second end of the base wall. The first wall and the second wall face each other. When the second bracket is assembled on the vehicle, the orientation of the first wall and the second wall is in rear direction of the vehicle.

The first side wall is a substantially C-shaped structure extending between a first portion and a second portion. Similarly, the second side wall is a substantially C-shaped structure extending between a third portion and a fourth portion. The first portion of the first side wall and the third portion of the second side wall are adapted to receive the first bracket. In one non-limiting example, each of the first portion and the third portion of the second bracket includes one or more first mounting holes. Similarly, the first bracket also includes one or more second mounting holes. During assembly, the one or more first mounting holes of the second bracket and the one or more second mounting holes of the first bracket are aligned with each other and fastened using one or more fasteners such as, not being limited to, screws, bolts, nuts and the likes.

The first portion also includes one or more first projections. The one or more first projections extends from the first portion of the first bracket in a direction towards the third portion of the second bracket and are parallel to a longitudinal axis of the speedometer assembly. The second portion also includes one or more second projections. The one or more second projections extend from the third portion in a direction towards the first portion of the second bracket and are parallel to the longitudinal axis of the speedometer mounting assembly. During assembly of the first bracket and the second bracket, the one or more first projections of the second bracket are adapted to be received in one or more first cavities of the first bracket. Similarly, during the assembly, the one or more second projections of the second bracket are adapted to be received in one or more second cavities of the first bracket. The interaction of the one or more first projections and the one or more second projections with the one or more first cavities and the one or more second cavities, respectively, prevents the rotation of the second bracket with respect to the first bracket.

The second portion and the fourth portion of the second bracket are adapted to receive a mounting plate. The mounting plate and the speedometer are assembled together such that movement of the mounting plate results in movement of the speedometer. A profile of each of the second portion and the fourth portion comprises a first face, a second face and a third face wherein the second face is provided between the first face and the third face. The first face forms a first pre-defined angle with the third face. The first face also forms a second pre-defined angle with a reference axis A-A passing through a center of the second portion and the fourth portion of the second bracket. The third face forms a third pre-defined angle with the reference axis A-A.

Owing to the first face, second face and third face of each of the second portion and the fourth portion of the second bracket, the speedometer can be adjusted at a first position, a second position and a third position, respectively. In the first position of the speedometer, the mounting plate is received on the first face of each of the second portion and the fourth portion of the second bracket. In the second position of the speedometer, the mounting plate is received on the second face of each of the second portion and the fourth portion of the second bracket. In the third position, the mounting plate is received on the third face of each of the second portion and the fourth portion of the second bracket. In order to adjust the speedometer/mounting plate at the first position, the second position or the third position, a lever is provided on the mounting plate underneath the speedometer facing the rider seated on a seat of the vehicle. The lever is capable of being rotated in a first direction and a second direction. The second direction is opposite to the first direction. The lever, on being operated in the first direction, allows movement of the mounting plate/speedometer such that the speedometer can be adjusted on either of the first position, the second position and the third position. After the speedometer is adjusted on either of the first position, second position and the third position, the lever is operated in the second direction to prevent the movement of the mounting plate/speedometer.

In an embodiment, a tiltable range of the speedometer is between 25 degrees to 50 degrees with respect to a reference axis passing through a center of the second portion and the fourth portion. The reference axis is parallel to the longitudinal axis of the second bracket.

In an embodiment, the base wall, the first side wall and the second side wall comprise one or more openings/holes for routing one or more wiring harness of the vehicle.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 illustrates a schematic view of a speedometer mounting assembly mounted on a steering column of a vehicle, in accordance with an embodiment of the present invention.
Figure 2 is a perspective view of a second bracket of the speedometer mounting assembly, in accordance with the embodiment of the present invention.
Figure 3 is a left-side view of the second bracket in accordance with the embodiment of the present invention.
Figure 4a is a right-side view of the second bracket in accordance with the embodiment of the present invention.
Figure 4b is a sectional view of the second bracket cut along line A-A of the Figure 4a, in accordance with the embodiment of the present invention.
Figure 5a illustrates a front view of a first bracket assembled with the second bracket, in accordance with the embodiment of the present invention.
Figure 5b illustrates a side view of the first bracket assembled with the second bracket in accordance with the embodiment of the present invention.
Figure 6a illustrates side view of the speedometer mounting assembly mounted on the vehicle, in accordance with the embodiments of the present invention.
Figure 6b illustrates sectional view of the speedometer mounting assembly shown in Figure 6a, in accordance with the embodiments of the present invention.
Figure 7 illustrates a profile of a second portion/fourth portion of the second bracket, in accordance with the embodiment of the present invention.
Figure 8a illustrates a first position of the speedometer, in accordance with the embodiment of the present invention.
Figure 8b illustrates an enlarged view of area C of Figure 8a, in accordance with the embodiment of the present invention.
Figure 9a illustrates a second position of the speedometer, in accordance with the embodiment of the present invention.
Figure 9b illustrates an enlarged view of area D of Figure 9a, in accordance with the embodiment of the present invention.
Figure 10a illustrates a third position of the speedometer, in accordance with the embodiment of the present invention.
Figure 10b illustrates an enlarged view of area E of Figure 10a, in accordance with the embodiment of the present invention.
Figure 11a is a perspective view of front portion of the vehicle indicating routing of wiring harness through the speedometer mounting assembly, in accordance with the embodiment of the present invention.
Figure 11b is a partially exploded view of front portion of the vehicle indicating routing of wiring harness through the speedometer mounting assembly, in accordance with the embodiment of the present invention.

### DETAILED DESCRIPTION OF THE INVENTION

Various features and embodiments of the present invention here will be discernible from the following further description thereof, set out hereunder.

For the purpose of the present invention, the term "vehicle" comprises a saddle type vehicle such as, not being limited to, motorcycles. The term "vehicle" also comprises, not being limited to, conventional internal combustion engine vehicles, electric vehicles and hybrid vehicles. The construction and working of different type of motorcycles are already known in the art and have not been reproduced here for the sake of brevity.

Arrows provided in the top right corner of figures depicts direction with respect to the vehicle, wherein an arrow F denotes front direction, an arrow R indicates rearward direction, an arrow Up denotes upward direction, an arrow Dw denoted downward direction, an arrow Rt denotes right direction and an arrow Lt denotes left direction, as and where applicable.

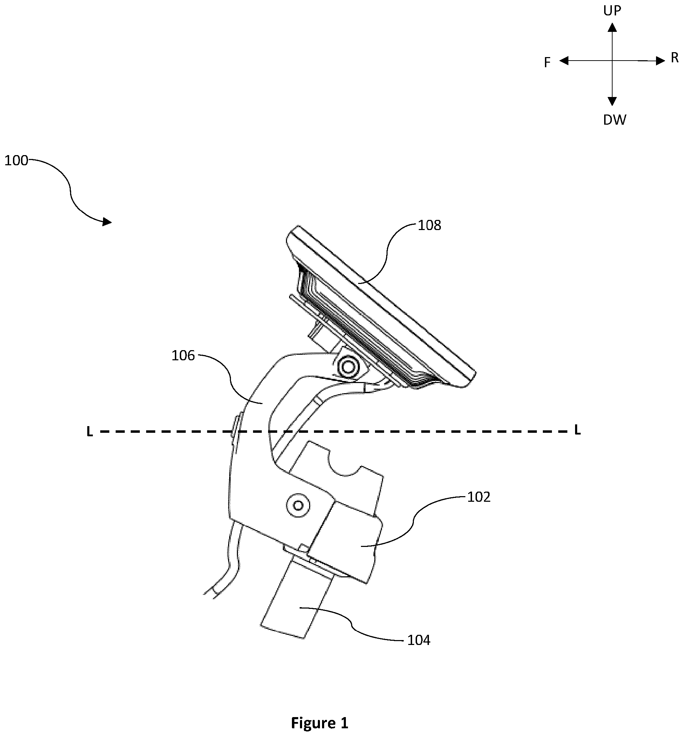

Figure 1 illustrates a schematic view of a speedometer mounting assembly 100 mounted on a steering column 104 of a vehicle, in accordance with an embodiment of the present invention.

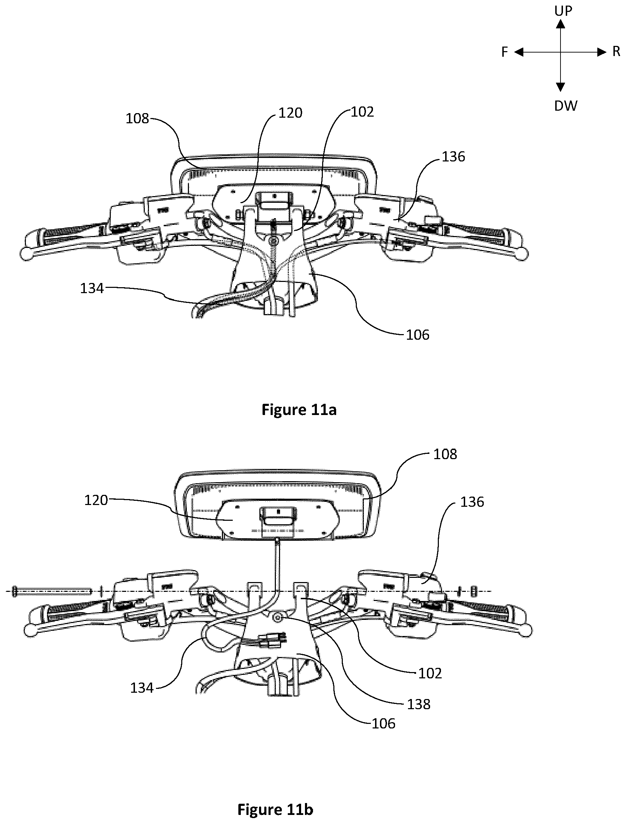

As shown, the speedometer mounting assembly 100 comprises a first bracket 102 and a second bracket 106. The first bracket 102 is adapted to be mounted on the steering column 104 of the vehicle. The construction and working of a steering column 104 are known in the art. The steering column 104 is supported in a head tube/head pipe (not shown) of the vehicle. In an upper portion of the head tube, a handlebar 136 (shown in Figure 11a) is rotatably connected to the steering column 104. The handlebar 136 is used to steer the vehicle and is operably connected to a front wheel (not shown) of the vehicle. In an embodiment, the first bracket 102 is also mounted/supported on the handlebar 136 of the vehicle.

The second bracket 106 is adapted to tiltably support a speedometer 108 of the vehicle. The second bracket 106 is interfaced with the first bracket 102 in a non-rotatable manner. In other words, the titling of the speedometer 108 at different angles/positions by a rider of the vehicle do not result in rotation of the second bracket 106 with respect to the first bracket 102. The speedometer 108 is supported on the second bracket 106 via a mounting plate 120. The mounting plate 120 is received on the second bracket 106. The speedometer 108 is assembled on the mounting plate 120 such that movement of the mounting plate 120 results in movement of the speedometer 108.

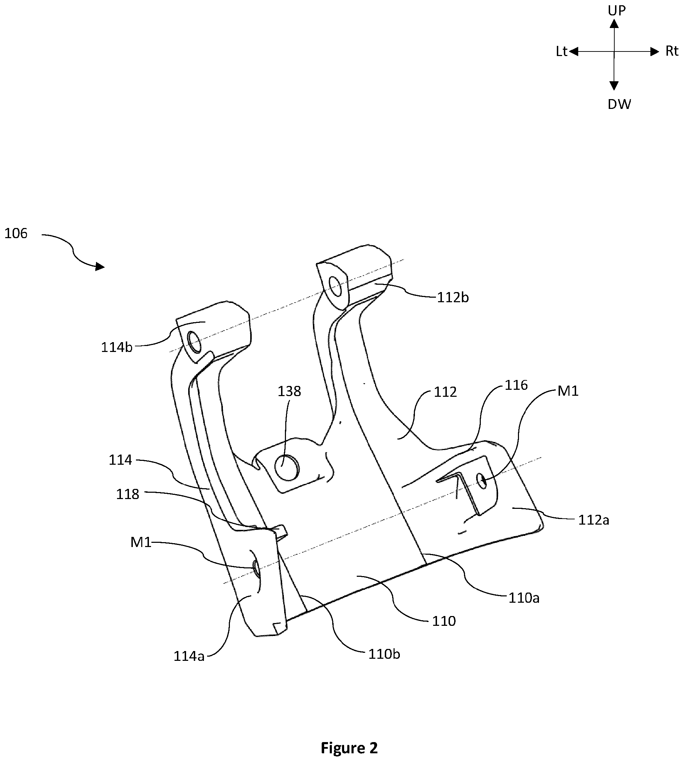

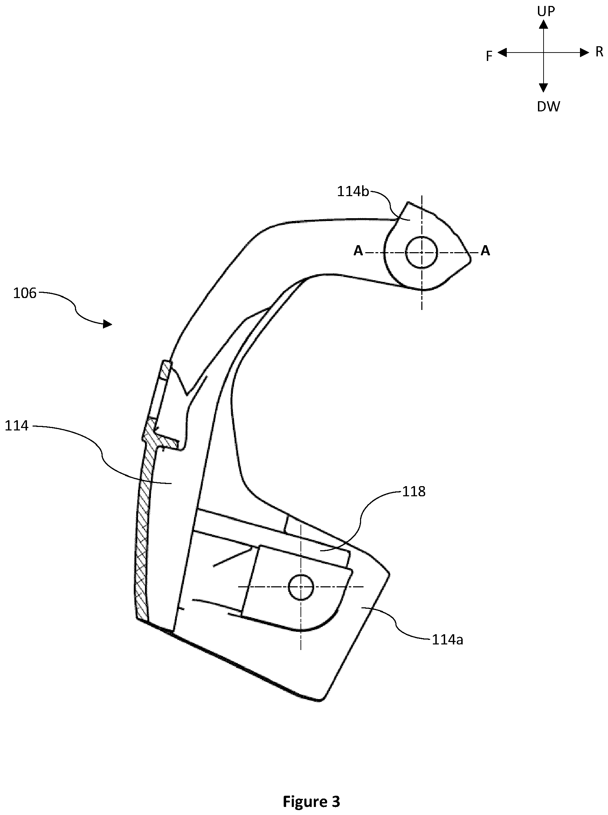

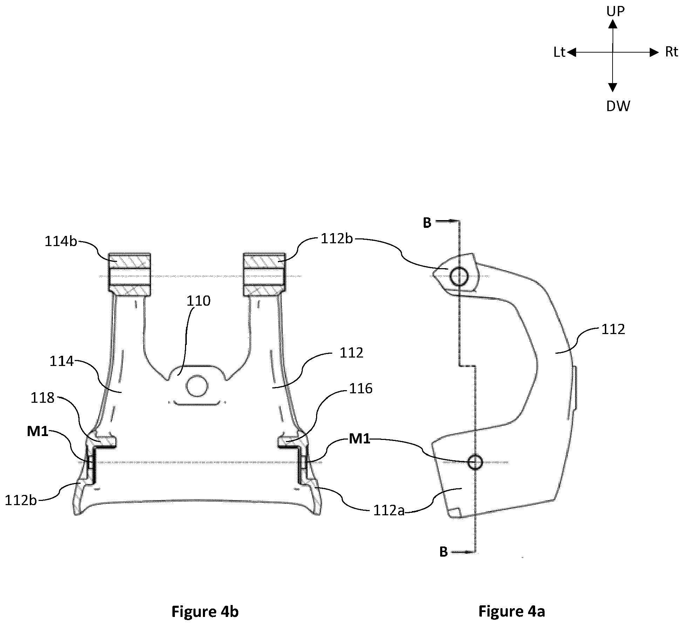

Figure 2 is a perspective view of the second bracket 106 of the speedometer mounting assembly 100, in accordance with the embodiment of the present invention. Figure 3 is a left-side view of the second bracket 106 in accordance with the embodiment of the present invention. Figure 4a is a right-side view of the second bracket 106 in accordance with the embodiment of the present invention. Figure 4b is a sectional view of second bracket 106 cut along line B-B of the Figure 4a, in accordance with the embodiment of the present invention.

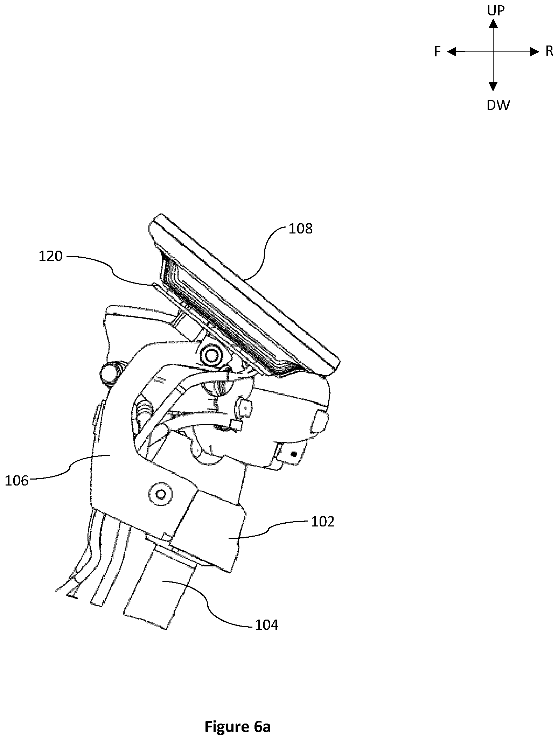

As shown in Figures 2-4, the second bracket 106 comprises a base wall 110, a first side wall 112, and a second side wall 114. The base wall 110 extends between a first end 110a and a second end 110b. The first side wall 112 extends from the first end 110a of the base wall 110. The second side wall 114 extends from the second end 110b of the base wall 110. When the speedometer mounting assembly 100 is mounted on the vehicle, the base wall 110 extends in a lateral direction of the vehicle and the first side wall 112 and the second side wall 114 extend in a rear direction of the vehicle. The first side wall 112 and the second side wall 114 face each other. The lateral (left-right) direction of the vehicle and the rear direction of the vehicle are shown in Figure 11a and Figure 6a, respectively.

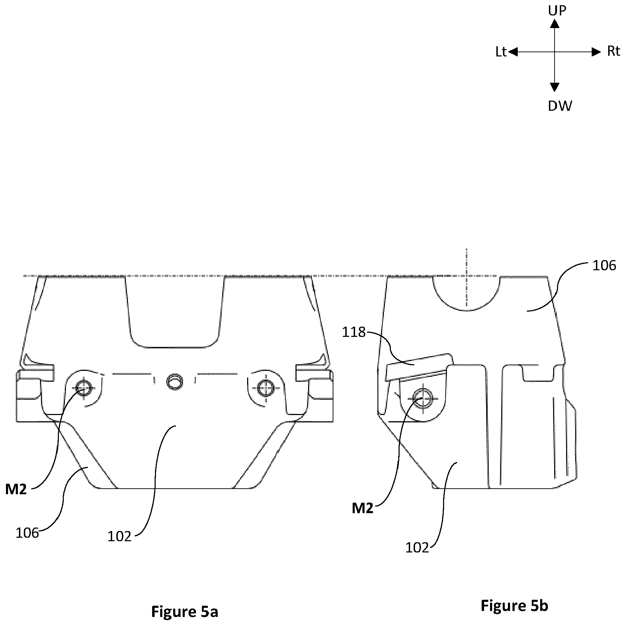

The first side wall 112 is substantially C-shaped structure extending between a first portion 112a and a second portion 112b. Similarly, the second side wall 114 is a substantially C-shaped structure extending between a third portion 114a and a fourth portion 114b. The first portion 112a and the third portion 114a are adapted to receive the first bracket 102. The second portion 112b and the fourth portion 114b are adapted to receive the mounting plate 120. As already stated, the speedometer 108 is assembled on the mounting plate 120 such that movement of the mounting plate 120 results in movement of the speedometer 108. The first portion 112a and the third portion 114a of the second bracket 106 comprises one or more mounting provisions to receive the first bracket 102. In one non-limiting example, one or more first mounting holes M1 are provided on the first portion 112a and the third portion 114a. The one or more first mounting holes M1 are adapted to be aligned with one or more second mounting holes M2 (shown in Figure 5a and Figure 5b) provided on the first bracket 102 for fastening of the first bracket 102 with the second bracket 106 using one or more fasteners such as, not being limited to, screws, nuts, bolts etc.

The first portion 112a of the second bracket 106 also comprises one or more first projections 116. The third portion 114a of the second bracket 106 also comprises one or more second projections 118. The one or more first projections 116 extend from the first portion 112a in a direction towards the third portion 114a and is parallel to a longitudinal axis L-L of the speedometer mounting assembly 100. The one or more second projections 118 extend from the third portion 114a in a direction towards the first portion 112a and is parallel to the longitudinal axis L-L of the speedometer mounting assembly 100. The one or more first projections 116 are adapted to be received in one or more first cavities/depressions (not shown) provided in the first bracket 102. The one or more second projections 118 are adapted to be received in one or more second cavities/depressions (not shown) provided in the first bracket 102. When the first bracket 102 and the second bracket 106 are assembled, the one or more first projections 116 are received in the one or more first cavities/depressions and the one or more second projections 118 are received in the one or more second cavities/depressions to prevent the rotation of the second bracket 106 with respect to the first bracket 102. When the speedometer 108 is tilted at various angle/positions (as discussed in subsequent paragraphs), it is necessary that the rotation of second bracket 106 with respect to first bracket 102 is prevented.

Further, one or more openings/holes 138 can be provided in the base wall 110, the first side wall 112, and the second side wall 114 for guiding and routing wiring harness of the vehicle to avoid issues such as, not being limited to, wire pinching while assembling the speedometer mounting assembly 100 on the vehicle and/or wire pulling issues when the handlebar 136 of the vehicle is steered.

Figure 5a illustrates a front view of the first bracket 102 assembled with the second bracket 106, in accordance with the embodiment of the present invention. Figure 5b illustrates a side view of the first bracket 102 assembled with the second bracket 106, in accordance with the embodiment of the present invention.

As shown, the first bracket 102 and the second bracket 106 are assembled. The one or more first mounting holes M1 (shown in Figure 2) of the second bracket 106 are aligned with one or more second mounting holes M2 of the first bracket 102 and fastened with one or more fasteners such as, not being limited to, screws, bolts, nuts etc. Also, as shown in Figure 5b, the one or more second projections 118 are received in one or more second cavities/depressions of the first bracket 102. Although not shown, the one or more first projections 116 are also received in the one or more first cavities/depressions of the first bracket 102. As already stated, when the one or more first projections 116 are received in the one or more first cavities/depressions and the one or more second projections 118 are received in the one or more second cavities, the rotation of the second bracket 106 with respect to the first bracket 102 is prevented.

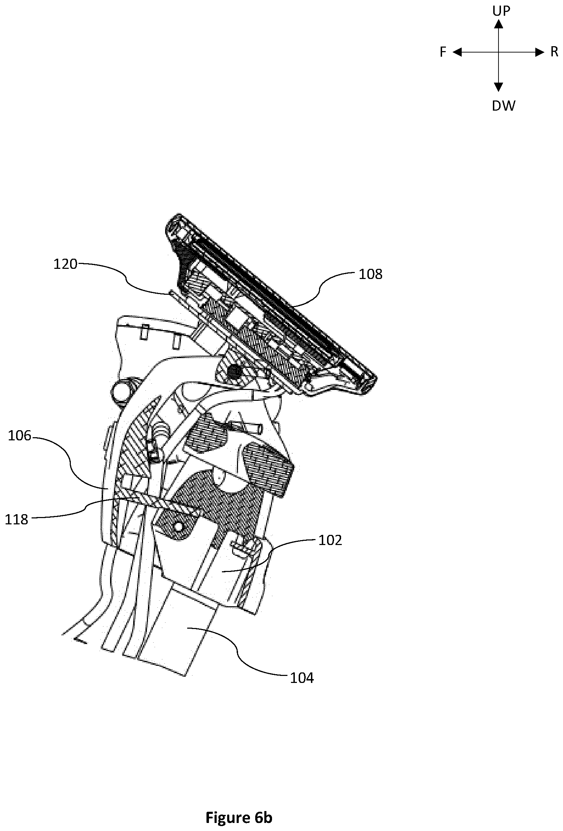

Figure 6a illustrates a side view of the speedometer mounting assembly 100 mounted on the vehicle, in accordance with the embodiments of the present invention. Figure 6b illustrates a sectional view of the speedometer mounting assembly 100 shown in Figure 6a, in accordance with the embodiments of the present invention.

As shown, the first bracket 102 is mounted on the steering column 104 of the vehicle. The second bracket 106 is assembled with the first bracket 102. The speedometer 108 is received on the second bracket 106 via the mounting plate 120 and is tiltably supported on the second portion 112b of the fourth portion 114b of the second bracket 106. The one or more first projections 116 (shown in Figure 4b) and the one or more second projections 118 of the second bracket 106 are received in the one or more first cavities/depressions and the one or more second cavities/depressions of the first bracket 102 to prevent rotation of the second bracket 106 with respect to the first bracket 102, when the speedometer 108 is tiltably supported at various angles/positions on the second bracket 106 (as discussed in subsequent paragraphs).

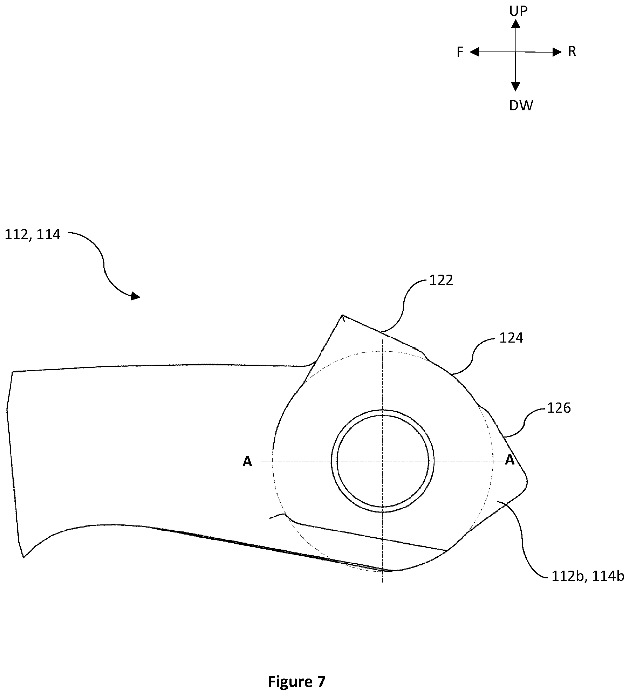

Figure 7 illustrates a profile of the second portion 112b/fourth portion 114b of the second bracket 106, in accordance with the embodiment of the present invention. As shown, the profile of the second portion 112b of the first side wall 112 and the fourth portion 114b of the second side wall 114 comprises a first face 122, a second face 124, and a third face 126. The second face 124 is provided between the first face 122 and the third face 126. The second face, in an embodiment, is arc-shaped, while the first face 122 forms a pre-defined first angle with the third face 126. For example, the first predefined angle ranges between 25- 50 degrees. The first face 122 and the third face 126 extend from the second face 124 in opposite directions. The first face 122 forms a second predefined angle with respect to ground or reference A-A and the third face 126 forms a third predefined angle with respect to ground or reference A-A. The second predefined angle and the third predefined angle range between 15-25 degrees and 30-60 degrees, respectively.

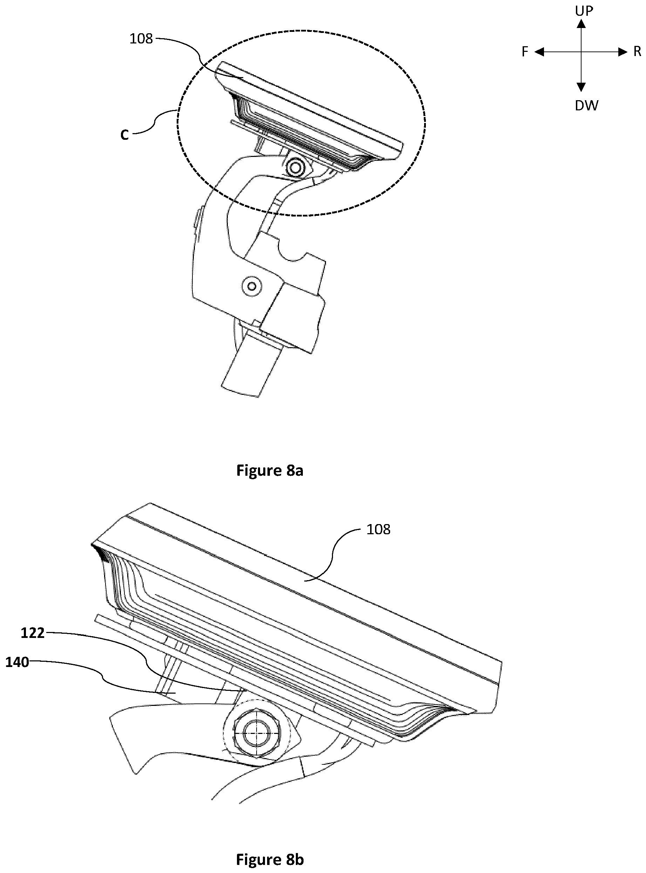

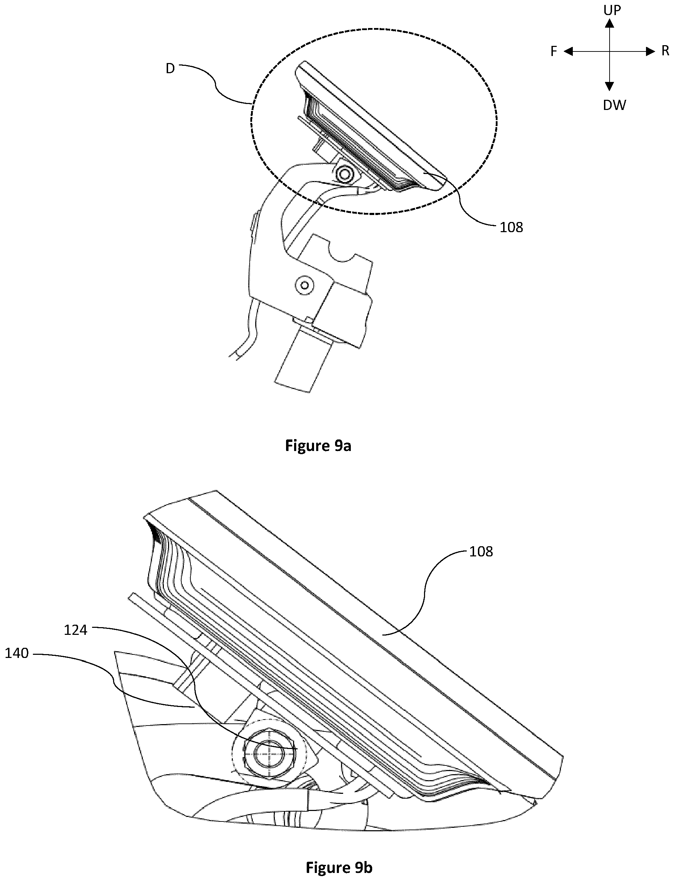

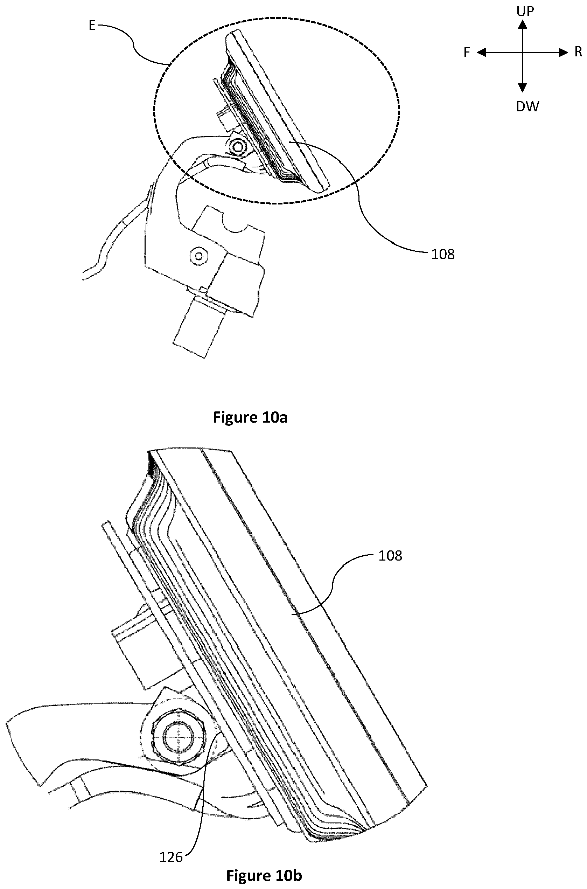

It is to be understood that the profile of the second portion 112b is same as the profile of the fourth portion 114b. The mounting plate 120 can be adjusted on the first face 122, the second face 124 or the third face 126 of each of the second portion 112b and the fourth portion 114b of the second bracket 106 to tiltably support the speedometer 108 at a first position (shown in Figure 8), a second position (shown in Figure 9) and a third position (shown in Figure 10).

In another non-limiting example, the tiltable range of the speedometer 108 is between the first face 122 and the third face 126 and lies between the angles 25-60 degrees with respect to a reference axis A-A passing through a center of the second portion 112b and the fourth portion 114b. The reference axis A-A is parallel to the longitudinal axis L-L of the speedometer mounting assembly 100 (as shown in Figure 1).

Figure 8a illustrates a first position of the speedometer 108, in accordance with the embodiment of the present invention. Figure 8b illustrates an enlarged view of area C of Figure 8a, in accordance with the embodiment of the present invention.

As shown, in the first position, the speedometer 108 is supported on the first face 122 of the second portion 112b and the first face 122 of the fourth portion 114b of the second bracket 106.

Figure 9a illustrates a second position of the speedometer 108, in accordance with the embodiment of the present invention. Figure 9b illustrates an enlarged view of area D of Figure 9a, in accordance with the embodiment of the present invention.

As shown, in the second position, the speedometer 108 is supported on the second face 124 of the second portion 112b and the second face 124 of the fourth portion 114b of the second bracket 106. Also, seen is the mounting plate 120 with provisions for the input-output ports 140 of the speedometer 108 to pass through.

Figure 10a illustrates a third position of the speedometer 108, in accordance with the embodiment of the present invention. Figure 10b illustrates an enlarged view of area E of Figure 10a, in accordance with the embodiment of the present invention.

As shown, in the third position, the speedometer 108 is supported on the third face 126 of the second portion 112b and the second face 124 of the fourth portion 114b of the second bracket 106.

In Figures 8-10, in order to adjust the speedometer 108 at the first position, the second position or the third position, a lever (not shown) is provided on the mounting plate 120. The lever is capable of being rotated in a first direction and a second direction. The second direction is opposite the first direction. The lever, on being operated in the first direction, allows movement of the speedometer 108 such that the speedometer 108 can be adjusted on either of the first position, the second position, and the third position. After the speedometer 108 is adjusted on either of the first position, second position, and the third position, the lever is operated in the second direction to prevent the movement of the speedometer 108. It is to be noted that the position of the lever on the mounting plate 120 is such that it can be easily operated by the rider of the vehicle in the first direction as well as the second direction while riding the vehicle. In one non-limiting example, the lever is provided on the mounting plate 120 underneath the speedometer 108 facing a rider seated on the seat of the vehicle.

Figure 11a is a perspective view of a front portion of the vehicle indicating routing of wiring harness 134 through the speedometer mounting assembly 100, in accordance with the embodiment of the present invention. Figure 11b is a partially exploded view of the front portion of the vehicle indicating routing of the wiring harness 134 from the speedometer 108 through the speedometer mounting assembly 100, in accordance with the embodiment of the present invention.

As shown, openings/holes 138 are provided on the base wall 110, the first side wall 112, and the second side wall 114 to receive the wiring harness 134 routed through the handlebar 136 of the vehicle.

The claimed features of the present invention as discussed above are not routine, conventional, or well understood in the art, as the claimed features enable the following solutions to the existing problems in conventional technologies. Specifically, the technical problem of not being able to adjust the speedometer as per the requirements of the rider of the vehicle has been solved by the present invention.

In the present invention, the speedometer can be tiltably supported on the second bracket of the speedometer mounting assembly . The speedometer can be adjusted at the first position, the second position or the third position as per the requirement of the rider of the vehicle. The adjustment of speedometer at the first position, the second position or the third position aids the rider to reduce heat caused by direct solar radiation on the speedometer and also provides relief to the rider from light reflected by the speedometer, thereby avoiding glare while riding. On adjusting the position of the speedometer, the readings of the speedometer are clearly visible to the rider of the vehicle in sunlight. The speedometer mounting assembly of the present invention also helps in transferring away heat from the speedometer to the handlebar of the vehicle, thereby acting like a heat sink and aids in better cooling of the speedometer.

In the present invention, owing to the openings/holes provided in the base wall, the first side wall and/or the second side wall, the wiring harness can be guided and routed efficiently through the speedometer mounting assembly. Owing to effective guiding and routing of the wiring harness, issues such as wire pinching and wire pulling can be eliminated.

In the present invention, the speedometer can be adjusted at various positions which increases the aesthetics and ergonomics of the vehicle.

In the present invention, the speedometer mounting assembly is a modular setup allowing use of multiple speedometer versions on a commonised mounting plate of the speedometer mounting assembly. Moreover, the speedometer mounting assembly can be mounted/supported by different types of handlebars.

In the present invention, the fasteners for fastening the first bracket and the second bracket are symmetrical and, therefore, does not negatively affect the aesthetics of the vehicle.

In the present invention, the rotation of the second bracket with respect to the first bracket is prevented to obtain a non-rotatable mounting of the speedometer.

While the present invention has been described with respect to certain embodiments, it will be apparent to those skilled in the art that various changes and modification may be made without departing from the scope of the invention as defined in the following claims.

### List of Reference Numerals

100 - speedometer mounting assembly
102 - first bracket
104 - steering column
106 - second bracket
108 - speedometer
110 - base wall
110a - first end of the base wall
110b - second end of the base wall
112 - first side wall
112a - first portion
112b - second portion
114 - second side wall
114a - third portion
114b - fourth portion
116 - first projections
118 - second projections
120 - mounting plate
122 - first face
124 - second face
126 - third face
134 - wiring harness
136 - handlebar
138 - openings/holes
140 - input/output ports of the speedometer
A-A - Reference axis
L-L - Longitudinal axis

## Claims

1. A speedometer mounting assembly (100) for a vehicle, the speedometer mounting assembly (100) comprising:
- a first bracket (102) adapted to be mounted on a steering column (104) of the vehicle; and
- a second bracket (106) adapted to tiltably support a speedometer (108) of the vehicle, the second bracket (106) being interfaced with the first bracket (102) to obtain a non-rotatable mounting of the speedometer (108).

2. The speedometer mounting assembly (100) as claimed in claim 1, wherein the second bracket (106) comprises:
- a base wall (110) extending between a first end (110a) and a second end (110b); and
- a first side wall (112) extending from the first end (110a) of the base wall (110) and a second side wall (114) extending from the second end (110b) of the base wall (110), the first side wall (112) facing the second side wall (114).

3. The speedometer mounting assembly (100) as claimed in claim 2, wherein the first side wall (112) is a C-shaped structure extending between a first portion (112a) and a second portion (112b) and the second side wall (114) is a C-shaped structure extending between a third portion (114a) and a fourth portion (114b).

4. The speedometer mounting assembly (100) as claimed in claim 3, wherein the first portion (112a) and the third portion (114a) of the second bracket (106) are adapted to receive the first bracket (102).

5. The speedometer mounting assembly (100) as claimed in claim 4, each of the first portion (112a) and the third portion (114a) of the second bracket (106) comprises one or more first mounting holes (M1), the one or more first mounting holes (M1) adapted to be aligned with one or more second mounting holes (M2) provided on the first bracket (102) for fastening of the first bracket (102) with the second bracket (106) using one or more fasteners.

6. The speedometer mounting assembly (100) as claimed in claim 4, wherein the first portion (112a) comprises one or more first projections (116) extending in a direction towards the third portion (114a) and the third portion (114a) comprises one or more second projections (118) extending in a direction towards the first portion (112a), the one or more first projections (116) and the one or more second projections (118) being parallel to a longitudinal axis (L-L) of the speedometer mounting assembly (100) and adapted to be received in the first bracket (102) to obtain non-rotatable mounting of the speedometer (108).

7. The speedometer mounting assembly (100) as claimed in claim 6, wherein the second portion (112b) and the fourth portion (114b) of the second bracket (106) are adapted to receive a mounting plate (120) assembled with the speedometer (108) such that movement of the mounting plate (120) on the second portion (112b) and the fourth portion (114b) results in movement of the speedometer (108).

8. The speedometer mounting assembly (100) as claimed in claim 7, wherein a profile of each of the second portion (112b) and the fourth portion (114b) comprises a first face (122), a second face (124) and a third face (126) and the second face (124) being provided between the first face (122) and the third face (126).

9. The speedometer mounting assembly (100) as claimed in claim 8, wherein: the first face (122) forms a pre-defined first angle with the third face (126), the first face (122) forms a second pre-defined angle with a reference axis (A-A) and the third face (126) forms a third pre-defined angle with the reference axis (A-A), the reference axis (A-A) passing through a center of the second portion (112b) and the fourth portion (114b) of the second bracket (106) and being parallel to the longitudinal axis (L-L) of the speedometer mounting assembly (100).

10. The speedometer mounting assembly (100) as claimed in claim 9, wherein:
- the mounting plate (120) is received on the first face (122) of each of the second portion (112b) and the fourth portion (114b) of the second bracket (106) in a first position of the speedometer (108);
- the mounting plate (120) is received on the second face (124) of each of the second portion (112b) and the fourth portion (114b) of the second bracket (106) in a second position of the speedometer (108); and
- the mounting plate (120) is received on the third face (124) of each of the second portion (112b) and the fourth portion (114b) of the second bracket (106) in a third position of the speedometer (108).

11. The speedometer mounting assembly (100) as claimed in claim 10, comprising a lever mounted on the mounting plate (120), the lever capable of being operated in a first direction and a second direction opposite the first direction wherein the lever, on being operated in the first direction, allows movement of speedometer (108) between the first position, the second position and the third position and wherein the lever, on being operated in the second direction, prevents movement of the speedometer (108).

12. The speedometer mounting assembly (100) as claimed in claim 3, wherein a tiltable range of the speedometer (108) is between 25 degrees to 60 degrees with respect to a reference axis (A-A) passing through a center of the second portion (112b) and the fourth portion (114b) of the second bracket (106), the reference axis (A-A) being parallel to the longitudinal axis (L-L) of the speedometer mounting assembly (100).

13. The speedometer mounting assembly (100) as claimed in claim 1, wherein the base wall (110), the first side wall (112), and the second side wall (114) comprises one or more openings (138) for routing wiring harness (134) of the vehicle.
